# EUROPÄISCHE PATENTSCHRIFT

(11) **EP 1 235 234 B1**
(45) Veröffentlichungstag und Bekanntmachung des Hinweises auf die Patenterteilung: **25.04.2007**
(21) Anmeldenummer: 02003537.4
(22) Anmeldetag: 15.02.2002
(51) Int. Cl.: H01F 7/126, B60T 8/36

(54) **Vorrichtung mit einem Gehäuse und einer Spule**
Device comprising a housing and a bobbin
Appareil comprenant un boîtier et une bobine

(30) Priorität: 26.02.2001 DE 10109210
(43) Veröffentlichungstag der Anmeldung: 28.08.2002
(73) Patentinhaber: SIEMENS AKTIENGESELLSCHAFT, 80333 München (DE)
(72) Erfinder: Weis, Christian, 55120 Mainz (DE)

(56) Entgegenhaltungen:
- US-A- 5 820 228
- US-A- 5 842 753
- US-A- 6 164 732
- US-B1- 6 186 603

## Beschreibung

Die Erfindung betrifft eine Vorrichtung mit einem Gehäuse und einer Spule, die einen annähernd zylinderförmigen Spulenkörper aufweist, auf dem eine bestrombare Wicklung angeordnet ist, mit einem Dom des Gehäuses, den die Spule mit ihrem Spulenkörper radial umschließt, wobei in dem Dom ein ein Absperrorgan aufweisendes Ventil angeordnet ist, dessen Absperrorgan mittels eines Magnetfeldes verstellbar ist, das durch eine Bestromung der Wicklung der Spule erzeugbar ist, mit einem Halteelement zur Halterung der Spule an dem Dom, das über ein Befestigungselement an dem Gehäuse angeordnet ist, wobei der Spulenkörper axial von Federelementen des Halteelements unmittelbar gegen das Befestigungselement vorgespannt ist, mit einem ein erstes Jochbein und ein zweites Jochbein aufweisenden Joch, in dem der Spulenkörper angeordnet ist und der Spulenkörper eine Aufnahme für das erste Jochbein aufweist.

Ventile weisen üblicherweise ein in einem Gehäuse angeordnetes Absperrorgan auf. Dieses Absperrorgan kann mechanisch oder elektromagnetisch betätigbar sein. Bei mechanisch betätigbaren Ventilen wirkt eine Kraft mittelbar oder unmittelbar auf das Absperrorgan ein, wobei die Kraft an einem Punkt angreift, der über eine mechanische Wirkverbindung mit dem Absperrorgan verbunden ist. Bei einer elektromagnetischen Verstellbarkeit des Abstellorgans wird die das Absperrorgan bewegende Kraft berührungsfrei mittels eines Magnetfeldes übertragen. Dieses Magnetfeld wird üblicherweise elektromagnetisch mit Hilfe einer bestrombaren Spule erzeugt.

Elektromagnetisch ansteuerbare Absperrorgane von Ventilen werden häufig dann eingesetzt, wenn eine unmittelbare Verbindung des Absperrorgans des Ventils an ein Element, an dem eine das Absperrorgan betätigende Kraft angreifen kann, mit Schwierigkeiten verbunden ist. Insbesondere bei Ventilen in hydraulischen Einrichtungen bietet sich eine elektromagnetische Ansteuerung der Ventile an, um eine Beeinträchtigung oder Schädigung der das Absperrorgan betätigenden Mechanik des Ventils zuverlässig zu vermeiden.

Eingangs- und/oder ausgangsseitig von einem hydraulischen Fluid umflossene Ventile können beispielsweise vollständig von einem Gehäuse umschlossen sein, wobei die Ventile über außerhalb des Gehäuses angeordnete bestrombare Spulen ansteuerbar sind. Insbesondere in der Kraftfahrzeugtechnik werden sogenannte Ventilblöcke gefertigt, aus denen fingerartig Dome hervorstehen in deren Innenraum elektromagnetisch ansteuerbare Ventile angeordnet sind. Außerhalb der Dome wird dann mittels eines Befestigungselements um jeden Dom herum ein Spulenkörper mit einer bestrombaren Wicklung angeordnet. Durch eine Bestromung der Wicklungen der Spulen sind Magnetfelder erzeugbar, über die die einzelnen in den Domen angeordneten Ventile elektromagnetisch ansteuerbar sind. Zur Erzeugung eines besonders homogenen Magnetfeldes sollten dabei die das Magnetfeld erzeugenden Spulen konzentrisch um das oder die jeweiligen Ventile angeordnet werden. Beispielsweise werden dabei die Spulen in Sackbohrungen des Befestigungselements eingesetzt und mit elastischer Dichtungsmasse befestigt. Das Aufbringen von Dichtungsmasse in das Befestigungselement erfordert bei der Herstellung des mit Spulen versehenen Befestigungselements einen erheblichen Herstellungsaufwand, da die Dichtungsmasse wohlportioniert in die einzelnen Sackbohrungen einzubringen ist. Auch behindert die Dichtmasse aufgrund ihrer im Gegensatz zu Metall schlechten Wärmeleitfähigkeit einen Abtransport von Wärme aus den Spulen beim Betrieb derselben, wodurch Schäden bedingt durch unzulässige Erhitzung nicht immer vermeidbar sind.

Aus der US-A-5,820,228 ist eine Vorrichtung der eingangs genannten Art bekannt. Dabei ist der Spulenkörper zwischen dem ersten und dem zweiten Jochbein des Jochs angeordnet.

Aus der DE 1117213 B ist ein elektromagnetisches Gerät mit mindestens zwei gleichen Spulenkörpern bekannt, von denen jeder einen Hohlraum zur Aufnahme eines Magnetschenkels sowie Flansche zur Begrenzung des Wicklungsraumes besitzt und von denen je zwei mit ihren Flanschen aneinander stoßen. Die einen Flansche der Spulenkörper weisen Öffnungen und die anderen Flansche nasenförmige Vorsprünge auf. Werden die Spulenkörper umseitig zusammengesteckt, so greifen die nasenförmigen Vorsprünge in die Öffnungen ein und verbinden die beiden Spulenkörper miteinander.

Der Erfindung liegt die Aufgabe zugrunde, eine Vorrichtung der oben genannten Art anzugeben, die einen besonders geringen Herstellungsaufwand erfordert und die gleichzeitig eine besonders gute Wärmeabfuhr beim Betrieb des Ventilblocks und eine dauerhafte Befestigung des Spulenkörpers an dem Joch gewährleistet.

Diese Aufgabe wird erfindungsgemäß dadurch gelöst, dass der Spulenkörper Fortsätze aufweist, die in Aussparungen des ersten Jochbeins einclipsbar sind. Der Spulenkörper kann dabei auf das erste Jochbein aufgeschoben und an diesem sozusagen aufgehängt werden. Bei einer Bestromung der den Spulenkörper teilweise umschließenden Wicklung erwärmt sich dann lediglich der unmittelbar an die Wicklung angrenzende Bereich des Spulenkörpers. Der außerhalb des ersten Jochbeins angeordnete Bereich des Spulenkörpers hingegen bleibt vergleichsweise kalt. Durch diese hängende Anordnung des Spulenkörpers in dem Joch kann eine Verformung der Aufhängung des Spulenkörpers in dem Joch aufgrund von Erwärmung besonders zuverlässig ausgeschlossen werden. Dadurch ist der Spulenkörper mit besonders geringem Montageaufwand besonders dauerhaft in dem Joch angeordnet. Durch die feste Anordnung des Spulenkörpers in dem Joch kann die Einheit Spulenkörper-Joch an einem ersten Ort fest zusammengefügt und an einem zweiten Ort in das Befestigungselement eingebracht werden. Auch lässt sich der Spulenkörper in dem vergleichsweise kälteren Bereich bei einer Bestromung der Wicklung in besonders einfacher Weise durch Steckkontakte elektrisch kontaktieren.

Ein mit besonders geringem Montageaufwand radial um einen Dom herum zu zentrierender Spulenkörper weist eine gewisse radiale Bewegbarkeit bei der Montage auf. Gleichzeitig sollte jedoch auch sichergestellt sein, dass der Spulenkörper beim Betrieb des Ventils eine feste Position einnimmt und nicht ohne Fremdeinwirkung von dem Dom des Gehäuses zu lösen ist. Der Spulenkörper ließe sich mittels eines Halteelements, das über Sicherungsmittel an dem Gehäuse befestigt ist, an dem Gehäuse anordnen. Dabei kann durch eine Anordnung von Federelementen zwischen dem Halteelement und dem jeweiligen Spulenkörper sichergestellt sein, dass der Spulenkörper auch im eingebauten Zustand radial bewegbar ist. Das Federelement kann dabei gleichzeitig sich veränderlichen axialen Abmaßen des Spulenkörpers bedingt durch eine besonders starke Erwärmung des Spulenkörpers bei einer Bestromung seiner Wicklung aufweisen. Auch gewährleistet das Federelement besonders zuverlässig eine Wärmeabfuhr aus den Spulen beim Betrieb der Spulen. Hierzu ist der Spulenkörper radial den Dom des Gehäuses umschließend von Federelementen des Halteelements axial gegen das Gehäuse vorgespannt.

Vorteilhafterweise sind die Federelemente einstückig mit dem Halteelement ausgebildet. In dieser Ausbildungsform weist das Halteelement einen besonders geringen Herstellungsaufwand auf und kann beispielsweise aus einem Blech durch Stanzen hergestellt werden, wobei Federelemente beim Stanzvorgang in dem Halteelement erzeugbar sind.

Vorteilhafterweise sind Sicherungsmittel einstückig mit dem Halteelement ausgebildet und an dem Befestigungselement zu befestigen, insbesondere einzuclipsen. Derartige Sicherungsmittel können bei einer Herstellung des Halteelements mittels eines Stanzvorgangs schon aus dem Rohling herausgestanzt werden und sind dann nur noch durch geeignete geometrische Verbiegungen in Form zu bringen. Ein Einclipsen der Halteelemente in das Befestigungselement verringert dabei den zur Montage der Haltevorrichtung erforderlichen Aufwand auf ein besonders geringes Mass.

Bei einer Vorrichtung mit einem Gehäuse mit einer Anzahl von Domen kann jeder Dom des Gehäuses radial von einer Spule umschlossen sein, wobei die Spulen über Federelemente eines gemeinsamen Halteelements unmittelbar axial gegen ein an dem Gehäuse angeordnetes Befestigungselement vorgespannt sind.

Dabei kann das Halteelement über Sicherungsmittel an dem Befestigungselement angeordnet sein. Bei einer Vielzahl von Domen und damit einer Vielzahl von Spulen weist dann die Montage der Spulen an dem Gehäuse ein besonders geringes Maß bedingt dadurch auf, dass diese über ein gemeinsames Befestigungselement an dem Gehäuse anzuordnen sind. Eine radiale Bewegbarkeit der Spulen im eingebauten Zustand in das Befestigungselement ist dabei durch das Halteelement zuverlässig gewährleistet.

Die mit der Erfindung erzielten Vorteile bestehen insbesondere darin, dass ein Spulenkörper mit einer auf dem Spulenkörper angeordneten und mit einer Stromquelle verbindbaren Wicklung in besonders einfacher Weise mittels eines ein Halteelement aufweisenden Befestigungselements an einem Dom eines Gehäuses anzuordnen ist. Dabei ist der Spulenkörper axial von Federelementen des Halteelements unmittelbar gegen das Befestigungselement vorspannbar. Hierdurch ist in besonders einfacher Weise eine zuverlässige Ansteuerung eines in einem Dom eines Gehäuses angeordneten Ventils gegeben.

Ein Ausführungsbeispiel der Erfindung wird anhand einer Zeichnung näher erläutert. Darin zeigen die Figuren:
- Fig. 1:: schematisch einen Ventilblock mit einer Vorrichtung zur Halterung einer Spule an einem Dom eines Gehäuses mittels eines Halteelements;
- Fig. 2:: schematisch einen Dom mit einem Ventil in Offenstellung;
- Fig. 3:: schematisch einen Dom mit einem Ventil in Schließstellung;
- Fig. 4:: schematisch die Halterung, eine Anzahl von Spulen und das Halteelement;
- Fig. 5:: schematisch das Halteelement angeordnet in einem Befestigungselement;
- Fig. 6:: eine Spule mit Spulenkörper und Joch in Explosivdarstellung und
- Fig. 7:: eine Spule.

Einander entsprechende Teile sind in allen Figuren mit den gleichen Bezugszeichen versehen.

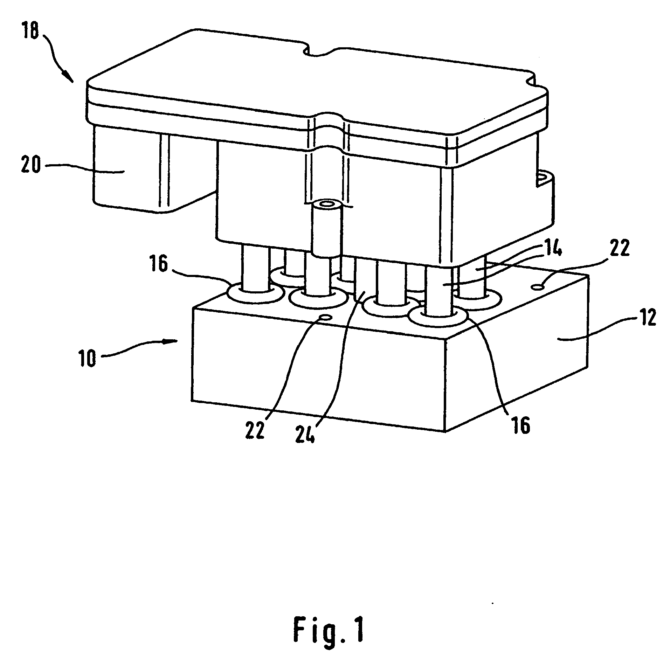

Der Ventilblock 10 ist in einem Kraftfahrzeug angeordnet und dient zur Steuerung der Strömung einer Flüssigkeit, mit der die Bremsen des Kraftfahrzeugs betrieben werden. Die Bremsen und das Kraftfahrzeug sind in der Zeichnung nicht näher dargestellt. Der Ventilblock 10 umfasst ein Gehäuse 12, aus dem eine Anzahl von Domen 14 herausragt. Die Dome 14 sind mit dem Gehäuse 12 des Ventilblocks 10 verpresst. An dem Ventilblock 10 ist die Anordnung einer Vorrichtung 18 vorgesehen, was in Figur 1 angedeutet ist. Von der Vorrichtung 18 ist in Figur 1 nur das Befestigungselement 20 von außen zu sehen. Zur Befestigung der Vorrichtung 18 an dem Gehäuse 12 des Ventilblocks 10 weist das Gehäuse 12 des Ventilblocks 10 Bohrungen 22 auf. In diese Bohrungen 22 greifen Befestigungsmittel, mit denen das Befestigungselement 20 an dem Gehäuse 10 des Ventilblocks 12 zu befestigen ist. Weiterhin weist die Vorrichtung 18 einen Pumpenmotorstecker 24 auf, der in eine in dem Gehäuse 12 des Ventilblocks 10 vorgesehene und in der Zeichnung nicht näher dargestellte Buchse greifen kann. Im befestigten Zustand sind die Dome 14 nicht mehr zu sehen.

Die Dichtungen 16 dichten dann den Innenraum der Vorrichtung 18 gegen äußere Verunreinigungen ab. Die Dichtungen 16 können alternativ auch als umlaufende Blockdichtung ausgebildet sein. Die Vorrichtung 18 liegt dann auf dem Gehäuse 12 des Ventilblocks 10 auf.

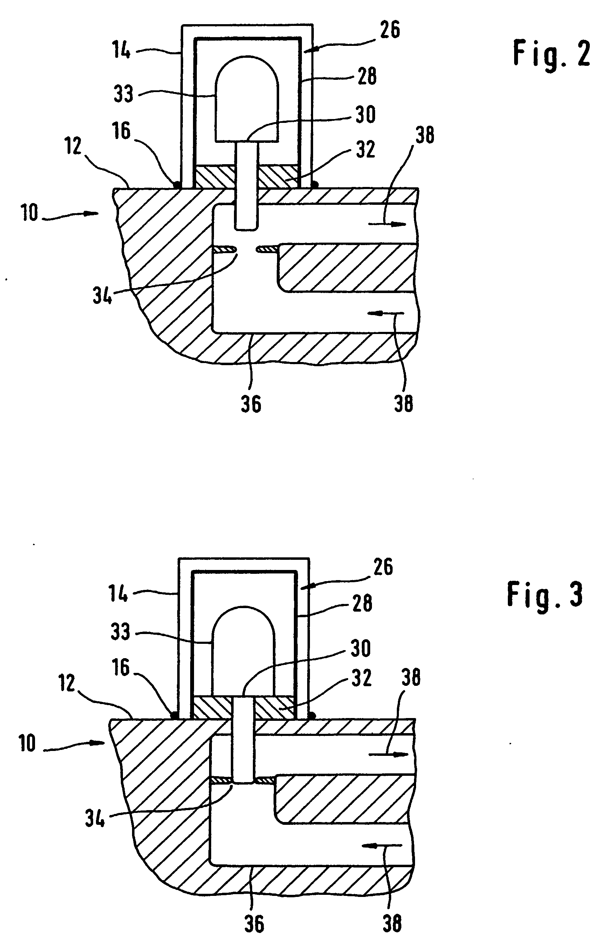

Einen Querschnitt durch einen Dom 14 zeigen schematisch die Figuren 2 und 3. In dem Dom 14 ist ein Ventil 26 angeordnet. Das Ventil 26 umfasst ein Ventilgehäuse 28, ein Absperrorgan 30 und ein ferromagnetisches Metallstück 32. Das Absperrorgan weist einen Stößel 33 auf, der von einem von außen auf das Ventilgehäuse 28 wirkenden Magnetfeld magnetisierbar ist. Im unmagnetisierten Zustand ist das Ventil 26 geöffnet. Alternativ kann das Ventil 26 jedoch auch im unmagnetisierten Zustand geschlossen sein. Das Absperrorgan 30 ist dann mittels einer in der Zeichnung nicht näher dargestellten Feder gegen den Permanentmagneten 32 vorgespannt, was in Figur 2 zu sehen ist. Im magnetisierten Zustand ist das Ventil geschlossen. Das Absperrorgan 30 ist dann gegen die Kraft der in der Zeichnung nicht näher dargestellten Feder gegen den Permanentmagneten 32 gedrückt, was in Figur 3 zu sehen ist. In Offenstellung gemäß Figur 2 gibt das Absperrorgan 30 des Ventils 26 eine Durchströmungsöffnung 34 einer Leitung 36 frei. In dieser Leitung 36 ist Öl 38 als Flüssigkeit für Bremsen des Kraftfahrzeugs geführt. Blockieren die Bremsen, so wird über eine in der Zeichnung nicht näher dargestellte Steuereinrichtung das Ventil 26 geschlossen. Ein Schließen des Ventils 26 blockiert die Durchströmung der Leitung 36 an der Durchströmungsöffnung 34, wodurch an den Bremsen kein Druck durch das Öl 38 mehr aufgebaut wird. Alternativ kann ein vergleichbarer Effekt auch durch ein Öffnen des Ventils 26 herbeigeführt werden. Die Bremsen werden also freigegeben und blockieren nicht mehr. Der Ventilblock 10 gehört also zu einem für die Bremsen des Kraftfahrzeugs vorgesehenen Antiblockiersystem.

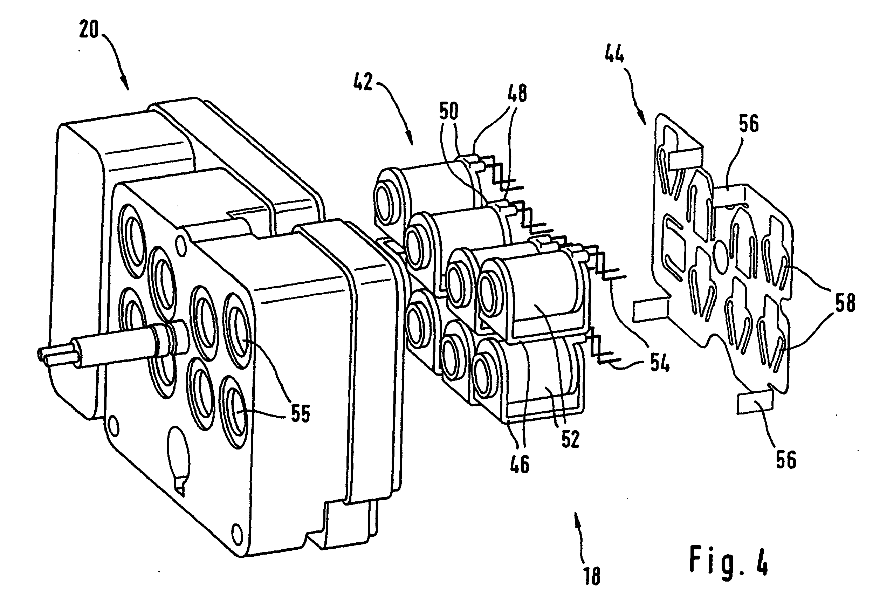

In dem Befestigungselement 20 sind eine Anzahl von Spulen 42 gemäß Figur 4 mittels eines Halteelements 44 anzuordnen. Hierzu umfassen die einzelnen Spulen 42 jeweils ein Joch 46. In den Jochen 46 ist jeweils ein aus Kunststoff 48 gefertigter Spulenkörper 50 angeordnet. Auf den Spulenkörpern 50 sind die Wicklungen 52 der jeweiligen Spule 42 angeordnet. Die Wicklungen 52 bestehen aus Kupferdrähten. Alternativ kann jedoch auch ein anderer elektrisch leitender Stoff für die Wicklungen 52 verwendet werden. Die Wicklungen 52 der Spulen 42 sind über elektrische Kontakte 54 bestrombar. Die einzelnen Spulen 42 werden mittels ihrer Joche 46 in dem Befestigungselement 20 in der Weise angeordnet, daß die Joche 46 in Öffnungen 55 des Befestigungselements 20 greifen. Durch die Öffnungen 55 schieben sich dann bei der Befestigung des Befestigungselements 20 an dem Gehäuse 12 des Ventilblocks 10 die Dome 14 des Gehäuses 12 des Ventilblocks 10 in die Spulenkörper 50 der Spulen 42 soweit hinein, daß die Spulenkörper 50 die Dome 14 radial vollständig und axial annähernd vollständig umschließen.

Die Spulen 42 sind mittels des Halteelements 44 in dem Befestigungselement 20 gesichert. Das Halteelement 44 ist als Stanzteil ausgebildet und umfasst als Sicherungsmittel 56 eine Anzahl von Stegen, die beim Stanzvorgang in das Halteelement 44 eingebracht worden sind und in Ausnehmungen des Befestigungselements 20 einzuclipsen sind. Weiterhin umfasst das Halteelement 44 eine ebenfalls mittels des Stanzvorgangs hergestellte Anzahl von Federelementen 58. Jeweils zwei Federelementen 58 ist eine Spule 42 zugeordnet. Alternativ können auch mehr oder weniger Federelemente 58 einer Spule 42 zugeordnet sein. Das Halteelement 44 drückt die einzelnen Spulen 42 in den Innenraum des Befestigungselements 20. Diese federnde Halterung der jeweiligen Spulen 42 in dem Befestigungselement 20 ermöglicht eine radiale Bewegbarkeit der Spulen 42 sowohl beim Einbau, wodurch die Zentrierung der Spulen 42 relativ zu den Domen 14 ermöglicht wird, als auch im eingebauten Zustand.

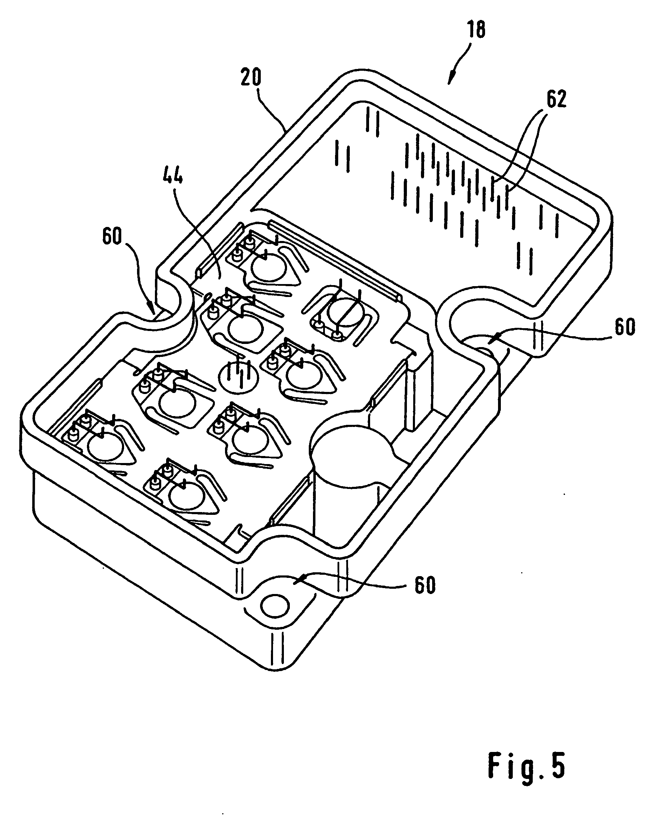

Die Vorrichtung 18 zur Halterung von Spulen 42 an Domen 14 des Gehäuses 12 des Ventilblocks 10 mit dem in dem Befestigungselement 20 angeordneten Halteelement 44 zeigt Figur 5. Zu erkennen sind auch Aussparungen 60 des Befestigungselements 20, die zur Befestigung des Befestigungselements 20 an dem Gehäuse 12 des Ventilblocks 10 vorgesehen sind. Weiterhin weist das Befestigungselement 20 elektrische Kontakte 62 auf, über die eine Stromzuführung von außen zu den einzelnen Spulen 42 erfolgen kann.

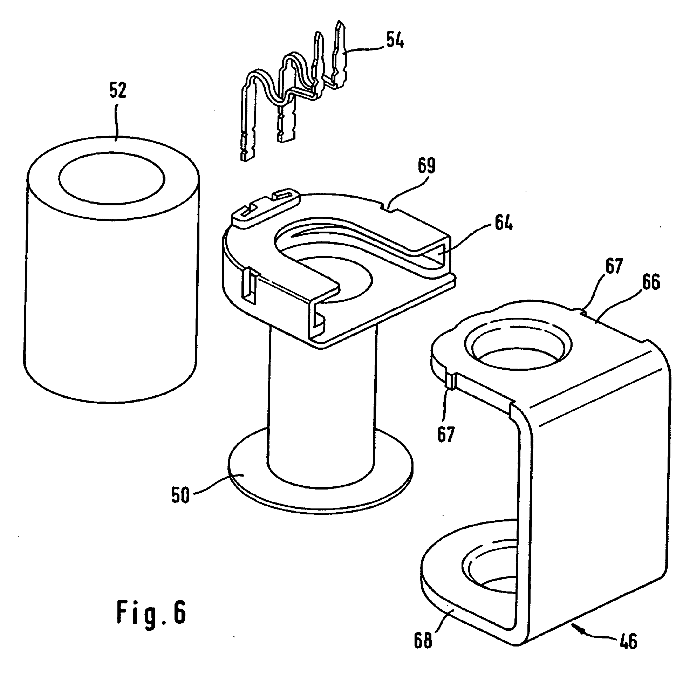

Eine schematische Explosivdarstellung einer Spule 42 zeigt Figur 6. Deutlich erkennbar ist, daß der Spulenkörper 50 eine Aufnahme 64 aufweist, in die das erste Jochbein 66 des Jochs 46 einschiebbar ist. Für eine dauerhafte Befestigung des Spulenkörpers 50 an dem Joch weist der Spulenkörper 50 Fortsätze 67 auf, die in Aussparungen 69 des ersten Jochbeins 66 einclipsbar sind. Neben dem ersten Jochbein 66 weist das Joch 46 weiterhin ein zweites Jochbein 68 auf. Die Wicklung 52 des Spulenkörpers 50 ist mittels der elektrischen Kontakte 54 bestrombar.

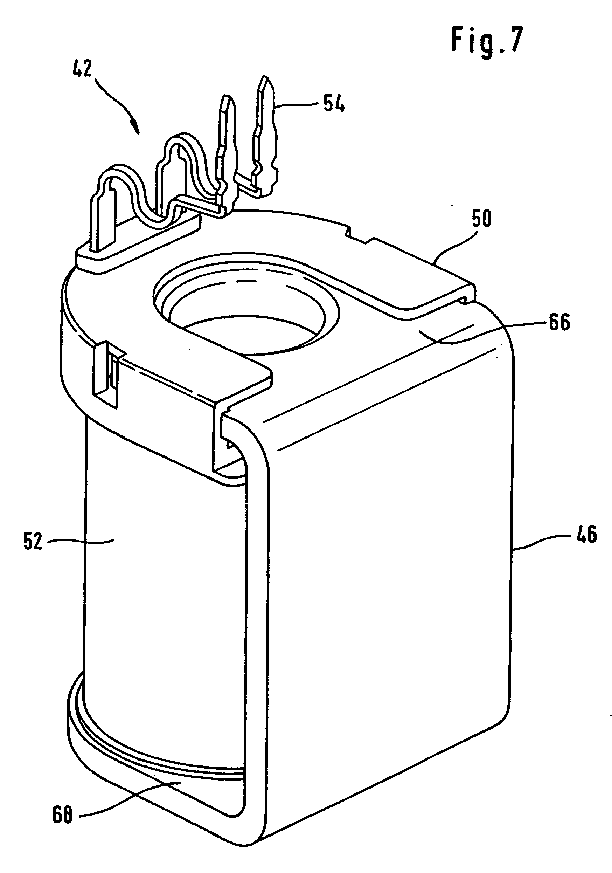

Eine Spule 42 zeigt schematisch Figur 7. Deutlich ist zu sehen, wie das erste Jochbein 66 des Jochs 46 in den Spulenkörper 50 greift. Die Wicklung 50 ist nur schematisch dargestellt.

Beim Einbau der Spulen 42 in das Befestigungselement 20 werden die Spulen 42 mittels des Halteelements 44 in dem Befestigungselement 20 angeordnet. Die federnde Halterung der Spulen 42 in dem Befestigungselement 20 mittels des Halteelements 44 gewährleistet besonders zuverlässig, daß die Spulen 42 nach einem Einbau in das Befestigungselement 20 axial gegen das Befestigungselement 20 vorgespannt und radial bewegbar sind. Durch die radiale Bewegbarkeit der Spulen 42 in dem Befestigungselement 20 ist zuverlässig gewährleistet, daß der radiale Mittelpunkt der einzelnen Spule 42 mit dem radialen Mittelpunkt des der einzelnen Spule 42 jeweils zugeordneten Doms 14 bei der Befestigung des Befestigungselements 20 an dem Gehäuse 12 des Ventilblocks 10 in Übereinstimmung bringbar ist. Diese Übereinstimmung der radialen Mittelpunkte gewährleistet eine ordnungsgemäße elektromagnetische Betätigung der Ventile 26 bei einer Bestromung der Spulen 42.

## Patentansprüche

1. Vorrichtung (18) mit einem Gehäuse (12) und einer Spule (42), die einen annähernd zylinderförmigen Spulenkörper (50) aufweist, auf dem eine bestrombare Wicklung (52) angeordnet ist, mit einem Dom (14) des Gehäuses (12), den die Spule (26) mit ihrem Spulenkörper (50) radial umschließt, wobei in dem Dom (14) ein ein Absperrorgan (30) aufweisendes Ventil (26) angeordnet ist, dessen Absperrorgan (30) mittels eines Magnetfeldes verstellbar ist, das durch eine Bestromung der Wicklung (52) der Spule (26) erzeugbar ist, mit einem Halteelement (44) zur Halterung der Spule (42) an dem Dom (14), das über ein Befestigungselement (20) an dem Gehäuse (12) angeordnet ist, wobei der Spulenkörper (50) axial von Federelementen (58) des Halteelements (44) unmittelbar gegen das Befestigungselement (20) vorgespannt ist, mit einem ein erstes Jochbein (66) und ein zweites Jochbein (68) aufweisenden Joch (46), in dem der Spulenkörper (50) angeordnet ist und der Spulenkörper (50) eine Aufnahme (64) für das erste Jochbein (66) aufweist, **dadurch gekennzeichnet, dass** der Spulenkörper (50) Fortsätze aufweist, die in Aussparungen des ersten Jochbeins (66) einclipsbar sind.

2. Vorrichtung (18) nach Anspruch 1 **dadurch gekennzeichnet, dass** die Federelemente (58) einstückig mit dem Halteelement (44) ausgebildet sind.

3. Vorrichtung (18) nach einem der Ansprüche 1 und 2 **dadurch gekennzeichnet, dass** Sicherungsmittel (56) einstückig mit dem Halteelement (44) ausgeführt und an dem Befestigungselement (20) zu befestigen, insbesondere einzuclipsen sind.

4. Vorrichtung nach einem der Ansprüche 1 bis 3, **dadurch gekennzeichnet, dass** das Gehäuse (12) mit einer Anzahl von Domen (14) versehen ist und an jedem Dom (14) jeweils eine Spule (26) angeordnet ist, wobei die Spulen (26) mittels eines in einem gemeinsamen Befestigungselement (20) angeordneten Halteelement (44) an dem Gehäuse (12) angeordnet sind.

## Claims

1. Device (18) having a housing (12) and a coil (42), which comprises an approximately cylindrical coil former (50), on which a winding (52) is arranged which is capable of having a current passed through it, having a dome (14) of the housing (12), which is surrounded radially by the coil (26) with its coil former (50), a valve (26) comprising a shut-off member (30) being arranged in the dome (14), the shut-off member (30) of said valve (26) being adjustable by means of a magnetic field, which may be produced by passing current through the winding (52) of the coil (26), having a retaining element (44) for holding the coil (42) on the dome (14), which retaining element (44) is arranged on the housing (12) via a fastening element (20), the coil former (50) being pretensioned axially by spring elements (58) of the retaining element (44) directly against the fastening element (20), having a yoke (46) comprising a first yoke leg (66) and a second yoke leg (68), in which yoke (46) the coil former (50) is arranged, and the coil former (50) comprising a receptacle (64) for the first yoke leg (66), **characterized in that** the coil former (50) comprises projections which may be clipped into recesses in the first yoke leg (66).

2. Device (18) according to Claim 1, **characterized in that** the spring elements (58) are of one-piece construction with the retaining element (44).

3. Device (18) according to one of Claims 1 and 2, **characterized in that** securing means (56) are made in one piece with the retaining element (44) and are intended to be fastened, in particular clipped, to the fastening element (20).

4. Device according to one of Claims 1 to 3, **characterized in that** the housing (12) is provided with a number of domes (14) and in each case one coil (26) is arranged on each dome (14), the coils (26) being arranged on the housing (12) by means of a retaining element (44) arranged in a common fastening element (20).

## Revendications

1. Dispositif (18) comportant un boîtier (12) et une bobine (42) ayant une armature (50) approximativement cylindrique sur laquelle est disposé un enroulement (52) pouvant être traversé par un courant électrique, le dit dispositif comportant un dôme (14) du boîtier (12), qui entoure radialement la bobine (26) et son armature (50), une soupape (26) comportant un organe de fermeture (30) étant disposée dans le dôme (14) et l'organe de fermeture (30) de ladite soupape pouvant être commandé par un champ magnétique produit par une mise sous tension de l'enroulement (52) de la bobine (26), le dit dispositif comportant un élément de retenue (44) destiné à fixer la bobine (42) au dôme (14), ledit élément de retenue étant fixé au boîtier (12) par l'intermédiaire d'un élément de fixation (20) et l'armature (50) de la bobine étant soumise, par des éléments à ressort (58) de l'élément de retenue (44), dans le sens axial à une force de précontrainte qui l'applique directement contre l'élément de fixation (20), le dit dispositif comportant une culasse (46), qui a une première jambe (66) et une deuxième jambe (68), dans laquelle culasse est placée l'armature (50) de la bobine, et où l'armature (50) de la bobine comporte un logement (64) pour la première jambe (66) de la culasse, **caractérisé par le fait que** l'armature (50) de la bobine a des prolongements qui peuvent s'encliqueter dans des évidements de la première jambe (66) de la culasse.

2. Dispositif (18) selon la revendication 1, **caractérisé par le fait que** les éléments à ressort (58) sont conçus pour former une seule pièce avec l'élément de retenue (44).

3. Dispositif (18) selon l'une des revendications 1 et 2, **caractérisé par le fait que** des moyens de sûreté (56) sont formés en une seule pièce avec l'élément de retenue (44) et se fixent, notamment s'encliquettent, à l'élément de fixation (20).

4. Dispositif (18) selon l'une des revendications 1 à 3, **caractérisé par le fait que** le boîtier (12) est doté d'un certain nombre de dômes (14) et qu'une bobine (26) est affectée à chaque dôme (14), les bobines (26) étant placées dans le boîtier (12) au moyen d'un élément de retenue (44) disposé dans un élément de fixation (20) commun.
